# EUROPÄISCHE PATENTSCHRIFT

(11) **EP 1 390 432 B1**
(45) Veröffentlichungstag und Bekanntmachung des Hinweises auf die Patenterteilung: **22.09.2004**
(21) Anmeldenummer: 02737921.3
(22) Anmeldetag: 04.04.2002
(51) Int. Cl.: C08L 83/07

(54) **HOCHVISKOSE ALKENYL-TERMINIERTE POLYDIORGANOSILOXANE ENTHALTENDE ADDITIONSVERNETZBARE SILICONMASSEN**
HIGHLY VISCOUS SILICONE MASSES COMPRISING ALKENYL-TERMINATED POLYDIORGANOSILOXANES WHICH MAY BE CROSS-LINKED BY ADDITION
PATES DE SILICONE RETICULABLES PAR ADDITION CONTENANT DES POLYDIORGANOSILOXANES A TERMINAISON ALCENYLE FORTEMENT VISQUEUX

(30) Priorität: 03.05.2001 DE 10121513
(43) Veröffentlichungstag der Anmeldung: 25.02.2004
(73) Patentinhaber: Wacker-Chemie GmbH, 81737 München (DE)
(72) Erfinder: ACHENBACH, Frank, 84359 Simbach/Inn (DE); WÖRNER, Christof, 84489 Burghausen (DE); SCHACHERBAUER, Birgit, 84359 Simbach/Inn (DE); EGERTER, Norbert, 84561 Mehring (DE)
(74) Vertreter: Fritz, Helmut, Dr.
(86) Internationale Anmeldenummer: PCT/EP2002/003759
(87) Internationale Veröffentlichungsnummer: WO 2002/090437

(56) Entgegenhaltungen:
- EP-A- 0 305 073
- DE-A- 3 729 742
- US-A- 3 884 866
- US-A- 5 519 082

## Beschreibung

Die Erfindung betrifft additionsvernetzbare Siliconmassen und die daraus erhältlichen Siliconelastomere.

Bekanntermaßen können durch Zusatz von Polydiorganosiloxanen mit kettenständigen Alkenylgruppen zu alkenyldiorganosiloxy-terminierten Polydiorganosiloxanen mit einer Viskosität von bis zu 200 000 mPas additionsvernetzbare Flüssigsiliconkautschuke (LSR-Massen) hergestellt werden, die nach der Vernetzung Siliconelastomere mit verbesserter Mechanik liefern. Dies gilt insbesondere für den Weiterreißwiderstand nach ASTM D 624 B. Um die mechanischen Eigenschaften, insbesondere den Weiterreißwiderstand, zu verbessern, werden zu alkenyldiorganosiloxy-terminierten Polydiorganosiloxanen zum einen Polydiorganosiloxane mit end- und kettenständigen Alkenylgruppen oder niederviskose alkenyldiorganosiloxyterminierte Polydiorganosiloxane eingesetzt.

EP-A-305073 beschreibt die Verbesserung der mechanischen Eigenschaften, insbesondere des Weiterreißwiderstands, durch Zugabe eines Polydiorganosiloxans, das Vinylgruppen sowohl am Kettenende als auch in der Kette trägt und eine Viskosität von 100-200 000 mPas besitzt, zu einem vinylterminierten Polydiorganosiloxan mit einer Viskosität von 20 000 bis 200 000 mPas. Mit dieser Polymer-Kombination können Siliconelastomere mit einem Weiterreißwiderstand von ca. 40 N/mm (ASTM D624) und einer Reißdehnung von maximal 580% bei einer Härte von ca. 50 Shore A erhalten werden.

EP-A-695787 beschreibt die Verbesserung des Weiterreißwiderstands mit Hilfe eines niedermolekularen vinylterminierten Polydiorganosiloxans mit einer Viskosität von 1,0 bis <50 mPas. Allerdings hat der Zusatz solch niederviskoser vinylterminierter Polydiorganosiloxane eine Reduzierung der Reißdehnung zur Folge.

Es bestand daher die Aufgabe, additionsvernetzbare Siliconmassen bereitzustellen, die zu Siliconelastomeren mit hoher Reißdehnung und Weiterreißwiderstand vernetzen.

Gegenstand der Erfindung sind additionsvernetzbare Siliconmassen, die
(A) 100 Gewichtsteile Diorganopolysiloxan mit einer bei 25°C bestimmten Viskosität von 220 000 bis 1 000 000 mPas, aufgebaut aus 2 Einheiten der allgemeinen Formel (1)

   [R₂R¹SiO_{1/2}] (1),

   Einheiten der allgemeinen Formel (2)

   [R₂SiO_{2/2}] (2),

   und
   0 bis 0,1 mol-% Einheiten der allgemeinen Formel (3)

   [RR¹SiO_{2/2}] (3),

   wobei in den allgemeinen Formeln (1) bis (3)
   - **R**: gleiche oder verschiedene einwertige, gegebenenfalls halogen- oder cyanosubstituierte, über SiC-gebundene C₁-C₁₈-Kohlenwasserstoffreste, die frei sind von aliphatischen Kohlenstoff-Kohlenstoff Mehrfachbindungen und
   - **R**^{**1**}: gleiche oder verschiedene einwertige, gegebenenfalls halogen- oder cyanosubstituierte, gegebenenfalls über eine organische zweiwertige Gruppe an Silicium gebundene C₁-C₁₀- Alkenylgruppen bedeuten,
(B) 2 bis 100 Gewichtsteile Diorganopolysiloxan mit einer bei 25°C bestimmten Viskosität von 500 bis 1 000 000 mPas, aufgebaut aus Einheiten der allgemeinen Formel (2) und 0,5 bis 20 mol-% Einheiten der allgemeinen Formel (3) und 2 Einheiten, die ausgewählt werden aus Einheiten der allgemeinen Formeln (1) und Einheiten der allgemeinen Formel (4),

   [R₃SiO_{1/2}] (4),
(C) SiH-funktionelles Vernetzungsmittel, dessen Zusammensetzung der durchschnittlichen allgemeinen Formel (5)

   HₐR²_{b}SiO_{(4-a-b)/2} (5),

   entspricht, in der
   - **R**^{**2**}: die Bedeutungen von **R** aufweist und
   - **a** und **b**: nichtnegative ganze Zahlen sind,
   mit der Maßgabe, dass 0.5<**(a+b)**<3,0 und 0<**a**<2, und dass mindestens zwei siliciumgebundene Wasserstoffatome pro Molekül vorhanden sind und
(D) Hydrosilylierungskatalysator enthalten.

Durch Verwendung des hochviskosen vinylterminierten Polydiorganosiloxans (A) in Kombination mit einem Polydiorganosiloxan (B), das Vinylgruppen in der Kette und optional auch am Kettenende trägt, werden LSR-Elastomere erhalten, die sehr hohe Reißdehnungen und Weiterreißwiderstände sowohl nach ASTM D 624 B als auch nach DIN 53507 aufweisen. Die additionsvernetzbaren Flüssigsiliconmassen können trotz der hohen Viskosität der verwendeten vinylterminierten Polydiorganosiloxane problemlos im Spritzguss verarbeitet werden.

Vorzugsweise beträgt die Viskosität des Polydiorganosiloxans (B) höchstens 50 %, insbesondere höchstens 20 % der Viskosität des Polydiorganosiloxans (A).

Beispiele für unsubstituierte Kohlenwasserstoffeste **R** sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, Octadecylreste, wie der n-Octadecylrest; Cycloalkylreste, wie Cyclopentyl-, Cyclohexyl-, 4-Ethylcyclohexyl-, Cycloheptylreste, Norbornylreste und Methylcyclohexylreste; Arylreste, wie der Phenyl-, Biphenylyl-, Naphthyl-, Anthryl- und Phenanthrylrest; Alkarylreste, wie o-, m-, p-Tolylreste, Xylylreste und Ethylphenylreste; Aralkylreste, wie der Benzylrest, der alpha- und der β-Phenylethylrest, sowie der Fluorenylrest.

Beispiele für substituierte Kohlenwasserstoffreste als Reste **R** sind halogenierte Kohlenwasserstoffe, wie der Chlormethyl-, 3-Chlorpropyl-, 3-Brompropyl, 3,3,3-Trifluorpropyl und 5,5,5,4,4,3,3-Heptafluorpentylrest sowie der Chlorphenyl-, Dichlorphenyl- und Trifluortolylrest.

Bei dem Kohlenwasserstoffrest **R** handelt es sich bevorzugt um unsubstituierte und substituierte C₁- bis C₆-Alkylreste und den Phenylrest, insbesondere um den Methyl- und Phenylrest..

Die Alkenylgruppen **R**^{**1**} sind einer Anlagerungsreaktion mit dem SiH-funktionellen Vernetzungsmittel (B) zugänglich. Üblicherweise werden Alkenylgruppen mit 2 bis 6 Kohlenstoffatomen, wie Vinyl, Allyl, Methallyl, 1-Propenyl, 5-Hexenyl, Ethinyl, Butadienyl, Hexadienyl, Cyclopentenyl, Cyclopentadienyl, Cyclohexenyl, vorzugsweise Vinyl und Allyl, verwendet.

Organische zweiwertige Gruppen, über die die Alkenylgruppen **R**^{**1**} an Silicium der Polymerkette gebunden sein können, bestehen beispielsweise aus Oxyalkyleneinheiten, wie solche der allgemeinen Formel (6)

-(O)ₘ[(CH₂)ₙO]ₒ- (6),

in der
- m: die Werte 0 oder 1, insbesondere 0,
- n: Werte von 1 bis 4, insbesondere 1 oder 2 und
- o: Werte von 1 bis 20, insbesondere von 1 bis 5 bedeuten.
Die Oxyalkyleneinheiten der allgemeinen Formel (6) sind links an ein Siliciumatom gebunden.

Vorzugsweise weist das Diorganopolysiloxan (A) eine bei 25°C bestimmte Viskosität von 300 000 bis 700 000 mPas auf.

Vorzugsweise weist das Diorganopolysiloxan (A) 0 bis 0,05 Gew.-%, insbesondere keine Einheiten der allgemeinen Formel (3) auf.

Das Polydiorganosiloxan (B) kann terminiert sein mit Einheiten der allgemeinen Formeln (1) und/oder Einheiten der allgemeinen Formel (4). Vorzugsweise ist das Polydiorganosiloxan (B) mit 2 Einheiten der allgemeinen Formeln (1) oder 2 Einheiten der allgemeinen Formel (4) terminiert.

Das Diorganopolysiloxan (B) weist vorzugsweise eine bei 25°C bestimmte Viskosität von 5 000 mPas bis 100 000 mPas, insbesondere bis 40 000 mPas auf.

Vorzugsweise enthält die additionsvernetzbare Siliconmasse mindestens 3, insbesondere mindestens 5 Gewichtsteile und höchstens 60, insbesondere höchstens 40 Gewichtsteile Diorganopolysiloxan (B).

Bevorzugt ist die Verwendung eines drei oder mehr SiH-Bindungen pro Molekül enthaltenden Vernetzungsmittels (C). Bei Verwendung eines nur zwei SiH-Bindungen pro Molekül aufweisenden Vernetzungsmittels empfiehlt sich die Verwendung eines Diorganopolysiloxans (B), das über mindestens drei Alkenylgruppen pro Molekül verfügt.

Der Wasserstoffgehalt des Vernetzungsmittels (C), welcher sich ausschließlich auf die direkt an Siliciumatome gebundenen Wasserstoffatome bezieht, liegt vorzugsweise im Bereich von 0,002 bis 1,7 Gew.-% Wasserstoff, vorzugsweise von 0,1 bis 1,7 Gew.-% Wasserstoff.

Das Vernetzungsmittels (C) enthält vorzugsweise mindestens drei und höchstens 600 Siliciumatome pro Molekül. Bevorzugt ist die Verwendung von Vernetzungsmittel (C), das 4 bis 200 Siliciumatome pro Molekül enthält.

Die Struktur des Vernetzungsmittels (C) kann linear, verzweigt, cyclisch oder netzwerkartig sein.

Besonders bevorzugte Vernetzungsmittel (C) sind lineare Polyorganosiloxane der allgemeinen Formel (7)

(HR³₂SiO_{1/2})_{c}(R³₃SiO_{1/2})_{d}(HR³SiO_{2/2})ₑ(R³₂SiO_{2/2})_{f} (7),

wobei
**R**^{**3**} die Bedeutungen von **R** haben und
die nichtnegativen ganzen Zahlen **c, d, e** und **f** folgende Relationen erfüllen: **(c+d)**=2, **(c+e)**>2, 5<**(e+f)**<200 und 1<**e**/**(e +f)**<0,1.

Das SiH-funktionelle Vernetzungsmittel (C) ist vorzugsweise in einer solchen Menge in der vernetzbaren Siliconkautschukmasse enthalten, dass das Molverhältnis von SiH-Gruppen zu Alkenylgruppen bei 0,5 bis 5, insbesondere bei 1,0 bis 3,0 liegt.

Als Hydrosilylierungskatalysator (D) können alle bekannten Katalysatoren eingesetzt werden, welche die bei der Vernetzung von additionsvernetzenden Siliconmassen ablaufenden Hydrosilylierungsreaktionen katalysieren. Als Hydrosilylierungskatalysatoren (D) können insbesondere Metalle und deren Verbindungen, wie Platin, Rhodium, Palladium, Ruthenium und Iridium, vorzugsweise Platin, eingesetzt werden. Vorzugsweise werden Platin und Platinverbindungen verwendet. Besonders bevorzugt werden solche Platinverbindungen, die in Polyorganosiloxanen löslich sind. Als lösliche Platinverbindungen können beispielsweise die Platin-Olefin-Komplexe der Formeln (PtCl₂.Olefin)₂ und H(PtCl₃.Olefin) verwendet werden, wobei bevorzugt Alkene mit 2 bis 8 Kohlenstoffatomen, wie Ethylen, Propylen, Isomere des Butens und Octens, oder Cycloalkene mit 5 bis 7 Kohlenstoffatomen, wie Cyclopenten, Cyclohexen und Cyclohepten, eingesetzt werden. Weitere lösliche Platin-Katalysatoren sind der Platin-Cyclopropan-Komplex der Formel (PtCl₂C₃H₆)₂, die Umsetzungsprodukte von Hexachloroplatinsäure mit Alkoholen, Ethern und Aldehyden bzw. Mischungen derselben oder das Umsetzungsprodukt von Hexachloroplatinsäure mit Methylvinylcyclotetrasiloxan in Gegenwart von Natriumbicarbonat in ethanolischer Lösung. Besonders bevorzugt sind Komplexe des Platins mit Vinylsiloxanen, wie sym-Divinyltetramethyldisiloxan. Ebenfalls sehr geeignet sind die in EP-A-1077226 und EP-A-994159 beschriebenen Platinverbindungen.

Hydrosilylierungskatalysator (D) kann in jeder beliebigen Form eingesetzt werden, beispielsweise auch in Form von Hydrosilylierungskatalysator enthaltenden Mikrokapseln, oder Organopolysiloxanpartikeln, wie beschrieben in EP-A-1006147.

Der Gehalt an Hydrosilylierungskatalysatoren (D) wird so gewählt, dass die additionsvernetzbare Siliconmasse einen Pt-Gehalt von 0,1-200 ppm, bevorzugt von 0,5-40 ppm besitzt.

Die additionsvernetzbare Siliconmasse kann zusätzlich Diorganopolysiloxan (E) mit einer bei 25°C bestimmten Viskosität von 1 000 bis 200 000 mPas, insbesondere 5 000 bis 100 000 mPas, aufgebaut aus 2 Einheiten der allgemeinen Formel (1), Einheiten der allgemeinen Formel (2) und 0 bis 0,01 mol-% Einheiten der allgemeinen Formel (3) enthalten. Vorzugsweise sind in der additionsvernetzbaren Siliconmasse höchstens 70 Gewichtsteile, insbesondere höchstens 30 Gewichtsteile Diorganopolysiloxan (E) enthalten. Vorzugsweise weist das Diorganopolysiloxan (E) 0 bis 0,05 Gew.-%, insbesondere keine Einheiten der allgemeinen Formel (3) auf.

Die mechanische Festigkeit des vulkanisierten Siliconkautschuks ist erhöht, wenn die additionsvernetzbaren Siliconmassen aktiv verstärkende Füllstoffe als Bestandteil (F) enthalten. Als aktiv verstärkende Füllstoffe (F) werden vor allem gefällte und insbesondere pyrogene Kieselsäuren, sowie Gemische derselben verwendet. Die spezifische Oberfläche dieser aktiv verstärkenden Füllstoffe sollte mindestens 50 m²/g betragen oder vorzugsweise im Bereich von 200 bis 400 m²/g gemäß der Bestimmung nach der BET-Methode liegen. Derartige aktiv verstärkende Füllstoffe sind auf dem Gebiet der Siliconkautschuke sehr gut bekannte Materialien.
Der Gehalt der additionsvernetzbaren Siliconmassen an aktiv verstärkendem Füllstoff (F) liegt vorzugsweise im Bereich von 5 bis 60 Gew.-%, insbesondere bei 10 bis 40 Gew.-%.

Die additionsvernetzbaren Siliconmassen können wahlweise als Bestandteil (G) weitere Zusätze zu einem Anteil von bis zu 70 Gew.-%, vorzugsweise 0,0001 bis 40 Gew.-%, enthalten. Diese Zusätze können z.B. inaktive (nicht verstärkende) Füllstoffe, harzartige Polyorganosiloxane, die von den Diorganopolysiloxanen (A), (B) und (E) verschieden sind, Dispergierhilfsmittel, Lösungsmittel, Haftvermittler, Pigmente, Farbstoffe, Weichmacher, organische Polymere, Hitzestabilisatoren usw. sein. Hierzu zählen Zusätze, wie Quarzmehl, Diatomeenerde, Tone, Kreide, Lithopone, Ruße, Graphit, Metalloxide, Metallcarbonate, -sulfate, Metallsalze von Carbonsäuren, Metallstäube, Fasern, wie Glasfasern, Kunststofffasern, Kunststoffpulver, Metallstäube, Farbstoffe, Pigmente usw. Desweiteren können als Bestandteil (G) thixotropierende Bestandteile, wie hochdisperse Kieselsäure oder andere handelsübliche Thixotropieadditive enthalten sein. Zusätzlich können auch als Kettenverlängerer Siloxane der Formel HSi(CH₃)₂-[O-Si(CH₃)₂]ₓ-H vorhanden sein, wobei x Werte von 1 bis 1000 bedeutet.
Enthalten sein können des weiteren Zusätze (G), die der gezielten Einstellung der Verarbeitungszeit, Anspringtemperatur und Vernetzungsgeschwindigkeit der additionsvernetzenden Massen dienen. Diese Inhibitoren und Stabilisatoren sind auf dem Gebiet der additionsvernetzenden Massen sehr gut bekannt.

Zusätzlich können auch Additive hinzugefügt werden, die den Druckverformungsrest verbessern. Zusätzlich können auch Hohlkörper hinzugefügt werden. Zusätzlich können auch Treibmittel zur Erzeugung von Schäumen hinzugefügt werden. Zusätzlich können auch nicht vinylfunktionalisierte Polydiorganosiloxane hinzugefügt werden.

Die Compoundierung der additionsvernetzbaren Siliconmassen erfolgt durch Mischen der oben aufgeführten Komponenten in beliebiger Reihenfolge. Die Vernetzung der additionsvernetzbaren Siliconmassen erfolgt vorzugsweise durch Erwärmen, vorzugsweise bei 30 bis 250°C, bevorzugt bei mindestens 50°C, insbesondere bei mindestens 100°C, bevorzugt bei höchstens 200°C, insbesondere bei höchstens 180°C.

Gegenstand der Erfindung sind auch die Siliconelastomere, die durch Vernetzen der additionsvernetzbaren Siliconmassen erhältlich sind.

In den nachfolgenden Beispielen sind, falls jeweils nicht anders angegeben,
a) alle Drücke 0,10 MPa (abs.);
b) alle Temperaturen 20° C .

### Beispiele:

### Beispiel 1 (nicht erfindungsgemäß)

### Herstellung der Grundmasse:

In einem Laborkneter wurden 790 Masseteile eines vinyldimethylsiloxy-terminierten Polydimethylsiloxans mit einer Viskosität von 100 000 mPas (25°C) vorgelegt, auf 150°C aufgeheizt und mit 460 Masseteilen einer hydrophoben pyrogenen Kieselsäure mit einer spezifischen Oberfläche nach BET von 300 m²/g und einem Kohlenstoffgehalt von 3,9 Gew.-% versetzt. Es entstand eine hochviskose Masse, die anschließend mit 350 Masseteilen eines vinyldimethylsiloxy-terminierten Polydimethylsiloxans mit einer Viskosität von 100 000 mPas (25°C) verdünnt wurde. Durch Kneten unter Vakuum (10 mbar) bei 150°C wurden innerhalb einer Stunde flüchtige Bestandteile entfernt.

560 g dieser Grundmasse wurden auf einer Walze bei einer Temperatur von 25°C mit 0,50 g Ethinylcyclohexanol, 14,0 g eines Mischpolymerisats aus Dimethylsiloxy-, Methylhydrogensiloxy- und Trimethylsiloxy-Einheiten mit einer Viskosität von 100 mPas bei 25°C und einem SiH-Gehalt von 0,48% sowie 0,48 g eines Platin-sym-Divinyltetramethyldisiloxan-Komplexes enthaltenden Lösung, die 1 Gew.-% Pt enthält, vermischt. Der Pt-Gehalt der Siliconmasse betrug 8 ppm.

Die auf diese Weise hergestellten Siliconmassen wurden anschließend in einer hydraulischen Presse bei einer Temperatur von 170°C innerhalb von 10 Minuten vernetzt. Die entformten, ca. 2 bzw. 6 mm dicken Siliconelastomerfolien wurden 4 Stunden bei 200°C in einem Umluftofen getempert.

### Beispiel 2 (nicht erfindungsgemäß)

### Herstellung der Grundmasse:

In einem Laborkneter wurden 670 Masseteile eines vinyldimethylsiloxy-terminierten Polydimethylsiloxans mit einer Viskosität von 100 000 mPas (25°C) und 120 Masseteile eines trimethylsiloxy-terminierten Polydimethylsiloxans mit einer Viskosität von 20 000 mPas (25°C), welches 2,1 mol-% Vinylmethylsiloxy-Einheiten in der Kette aufweist, vorgelegt, auf 150°C aufgeheizt und mit 460 Masseteilen einer hydrophoben pyrogenen Kieselsäure mit einer spezifischen Oberfläche nach BET von 300 m²/g und einem Kohlenstoffgehalt von 3,9 Gew.-% versetzt. Es entstand eine hochviskose Masse, die anschließend mit 350 Masseteilen eines vinyldimethylsiloxy-terminierten Polydimethylsiloxans mit einer Viskosität von 100 000 mPas (25°C) verdünnt wurde. Durch Kneten unter Vakuum (10 mbar) bei 150°C wurden innerhalb einer Stunde flüchtige Bestandteile entfernt.

Die Vernetzung der Siliconmasse erfolgte wie in Beispiel 1 beschrieben.

### Beispiel 3 (nicht erfindungsgemäß)

Wie in Beispiel 1 beschrieben, jedoch wurde anstelle des in Beispiel 1 verwendeten vinyldimethylsiloxy-terminierten Polydimethylsiloxans mit einer Viskosität von 100 000 mPas (25°C) ein vinyldimethylsiloxy-terminiertes Polydimethylsiloxan mit einer Viskosität von 500.000 mPas (25°C) eingesetzt. Die übrige Zusammensetzung der Siliconmasse sowie die Weiterverarbeitung blieben unverändert.

### Beispiel 4

Wie in Beispiel 2 beschrieben, jedoch wurde anstelle des in Beispiel 2 verwendeten vinyldimethylsiloxy-terminierten Polydimethylsiloxans mit einer Viskosität von 100 000 mPas (25°C) ein vinyldimethylsiloxy-terminiertes Polydimethylsiloxan mit einer Viskosität von 500 000 mPas (25°C) eingesetzt. Die übrige Zusammensetzung der Siliconmasse sowie die Weiterverarbeitung blieben unverändert.

### Beispiel 5

Wie in Beispiel 4 beschrieben, jedoch wurde anstelle des in Beispiel 4 verwendeten trimethylsiloxy-terminierten Polydimethylsiloxans mit einer Viskosität von 20 000 mPas (25°C), welches 2,1 mol-% Vinylmethylsiloxy-Einheiten in der Kette aufweist, ein vinyldimethylsiloxy-terminiertes Polydimethylsiloxan gleicher Viskosität und identischem Vinylmethylsiloxy-Gehalt eingesetzt. Die übrige Zusammensetzung der Siliconmasse sowie die Weiterverarbeitung blieben unverändert.

### Beispiel 6

Wie in Beispiel 4 beschrieben, jedoch wurden 20 Gew-% des in Beispiel 4 verwendeten vinyldimethylsiloxy-terminierten Polydimethylsiloxans mit einer Viskosität von 500 000 mPas (25°C) mit einem vinyldimethylsiloxy-terminiertem Polydimethylsiloxan mit einer Viskosität von 20 000 mPas (25°C) ersetzt. Die übrige Zusammensetzung der Siliconmasse sowie die Weiterverarbeitung blieben unverändert.

**Tabelle 1**

| Einfluss der Viskosität des verwendeten vinyldimethylsiloxyterminierten Polydimethylsiloxans und des Zusatzes von Polydiorganosiloxanen mit kettenständigen Alkenylgruppen auf die mechanischen Eigenschaften von LSR-Elastomeren. | | | | | | |
|---|---|---|---|---|---|---|
| | Viskosität der unvernetzten LSR-Masse [mPas] | Härte [Shore A] | Weiterreißwiderstand (ASTM D624) [N/mm] | Weiterreißwiderstand (DIN 53507 [N/mm] | Reißfestigkeit [N/mm²] | Reißdehnung [%] |
| Beispiel 1 Vergleich | 1 400 000 | 43 | 28 | 12,5 | 9,8 | 580 |
| Beispiel 2 Vergleich | 1 300 000 | 49 | 45 | 12,0 | 10,1 | 550 |
| Beispiel 3 Vergleich | 2 800 000 | 42 | 32 | 17,0 | 10,2 | 740 |
| Beispiel 4 | 2 500 000 | 48 | 47 | 19,1 | 10,5 | 720 |
| Beispiel 5 | 2 500 000 | 49 | 46 | 18,5 | 10,2 | 730 |
| Beispiel 6 | 2 000 000 | 49 | 47 | 18,1 | 10,2 | 690 |

Aus Tabelle 1 ist ersichtlich, dass durch Verwendung eines hochviskosen vinylterminierten Polydiorganosiloxan mit einer viskosität von 500 000 mPas in Kombination mit einem niedrigerviskosen Polydiorganosiloxan, das Vinylgruppen in der Kette aufweist, LSR-Elastomere erhalten werden, die sehr hohe Reißdehnungen und Weiterreißwiderstände sowohl nach ASTM D 624 B als auch nach DIN 53507 aufweisen.

### Beispiel 7

Wie in Beispiel 4 beschrieben, jedoch wurden anstelle des in Beispiel 1 beschriebenen SiH-Vernetzers 11,2 g eines Mischpolymerisats aus Dimethylsiloxy-, Methylhydrogensiloxyund Trimethylsiloxy-Einheiten mit einer Viskosität von 30 mPas bei 25°C und einem SiH-Gehalt von 0,37% verwendet.

### Beispiel 8

Wie in Beispiel 4 beschrieben, jedoch wurde anstelle der in Beispiel 1 verwendeten hydrophoben pyrogenen Kieselsäure eine teilweise mit Vinylgruppen funktionalisierte, hydrophobe pyrogene Kieselsäure verwendet.

**Tabelle 2**

| Einfluss unterschiedlicher Vernetzer und pyrogener Kieselsäuren mit unterschiedlichem Vinylgehalt auf die mechanischen Eigenschaften von LSR-Elastomeren. | | | | | | |
|---|---|---|---|---|---|---|
| | Viskosität der unvernetzten LSR-Masse [mPas] | Härte [Shore A] | Weiterreißwiderstand (ASTM D624) [N/mm] | Weiterreißwiderstand DIN 53507 [N/mmj | Reißfestigkeit [N/mm²] | Reißdehnung [%] |
| Beispiel 4 | 2 500 000 | 48 | 47 | 19,1 | 10,5 | 720 |
| Beispiel 7 | 2 300 000 | 41 | 43 | 19,0 | 10,2 | 810 |
| Beispiel 8 | 2 400 000 | 60 | 51 | 17,0 | 9,8 | 590 |

Aus Tabelle 2 ist ersichtlich, dass durch Verwendung eines hochviskosen vinylterminierten Polydiorganosiloxan mit einer Viskosität von 500 000 mPas in Kombination mit einem niedrigerviskosen Polydiorganosiloxan, das Vinylgruppen in der Kette aufweist, LSR-Elastomere erhalten werden, die über einen weiten Härtebereich sehr hohe Reißdehnungen und Weiterreißwiderstände sowohl nach ASTM D 624 B als auch nach DIN 53507 aufweisen.

Die Charakterisierung der Siliconelastomereigenschaften in den Beispielen 1-8 erfolgten gemäß DIN 53505 (Shore A), DIN 53504-S1 (Reißfestigkeit und Reißdehnung), ASTM D 624 B bzw. DIN 53507 (Weiterreißwiderstand). Die Viskosität wurde bei einer Scherrate von 0,9 s⁻¹ bestimmt.

## Patentansprüche

1. Additionsvernetzbare Siliconmassen, die
(A) 100 Gewichtsteile Diorganopolysiloxan mit einer bei 25°C bestimmten Viskosität von 220 000 bis 1 000 000 mPas, aufgebaut aus 2 Einheiten der allgemeinen Formel (1)
[R₂R¹SiO_{1/2}] (1),
Einheiten der allgemeinen Formel (2)
[R₂SiO_{2/2}] (2),
und
0 bis 0,1 mol-% Einheiten der allgemeinen Formel (3)
[RR¹SiO_{2/2}] (3),
wobei in den allgemeinen Formeln (1) bis (3)
**R** gleiche oder verschiedene einwertige, gegebenenfalls halogen- oder cyanosubstituierte, über SiC-gebundene C₁-C₁₈-Kohlenwasserstoffreste, die frei sind von aliphatischen Kohlenstoff-Kohlenstoff Mehrfachbindungen und
**R**^{**1**} gleiche oder verschiedene einwertige, gegebenenfalls halogen- oder cyanosubstituierte, gegebenenfalls über eine organische zweiwertige Gruppe an Silicium gebundene C₁-C₁₀- Alkenylgruppen bedeuten,
(B) 2 bis 100 Gewichtsteile Diorganopolysiloxan mit einer bei 25°C bestimmten Viskosität von 500 bis 1 000 000 mPas, aufgebaut aus Einheiten der allgemeinen Formel (2) und 0,5 bis 20 mol-% Einheiten der allgemeinen Formel (3) und 2 Einheiten, die ausgewählt werden aus Einheiten der allgemeinen Formeln (1) und Einheiten der allgemeinen Formel (4),
[R₃SiO_{1/2}] (4),
(C) SiH-funktionelles Vernetzungsmittel, dessen Zusammensetzung der durchschnittlichen allgemeinen Formel (5)
HₐR²_{b}SiO_{(4-a-b) /2} (5),
entspricht, in der
**R**^{**2**} die Bedeutungen von **R** aufweist und
**a** und **b** nichtnegative ganze Zahlen sind, mit der Maßgabe, dass 0.5<**(a+b)**<3,0 und 0<**a**<2, und dass mindestens zwei siliciumgebundene Wasserstoffatome pro Molekül vorhanden sind und
(D) Hydrosilylierungskatalysator enthalten.

2. Additionsvernetzbare Siliconmassen nach Anspruch 1, bei denen die Viskosität des Polydiorganosiloxans (B) höchstens 50 %, der Viskosität des Polydiorganosiloxans (A) beträgt.

3. Additionsvernetzbare Siliconmassen nach Anspruch 1 oder 2, bei denen das Diorganopolysiloxan (A) eine bei 25°C bestimmte Viskosität von 300 000 bis 700 000 mPas aufweist.

4. Additionsvernetzbare Siliconmassen nach Anspruch 1 bis 3, bei denen das Diorganopolysiloxan (B) eine bei 25°C bestimmte Viskosität von 5 000 mPas bis 100 000 mPas, aufweist.

5. Additionsvernetzbare Siliconmassen nach Anspruch 1 bis 4, bei denen die additionsvernetzbare Siliconmasse zusätzlich Diorganopolysiloxan (E) mit einer bei 25°C bestimmten Viskosität von 1 000 bis 200 000 mPas, aufgebaut aus 2 Einheiten der allgemeinen Formel (1), Einheiten der allgemeinen Formel (2) und 0 bis 0,01 mol-% Einheiten der allgemeinen Formel (3) enthält.

6. Siliconelastomere, erhältlich durch Vernetzen der additionsvernetzbaren Siliconmassen gemäß Anspruch 1 bis 5.

## Claims

1. Addition-crosslinkable silicone compositions comprising
(A) 100 parts by weight of a diorganopolysiloxane having a viscosity determined at 25°C of from 220 000 to 1 000 000 mPas and made up of 2 units of the formula (1)
[R₂R¹SiO_{1/2}] (1),
units of the formula (2)
[R₂SiO_{2/2}] (2),
and
from 0 to 0.1 mol% of units of the formula (3)
[RR¹SiO_{2/2}] (3),
where, in the formulae (1) to (3),
R are identical or different monovalent, unsubstituted or halogen- or cyano-substituted, SiC-bonded C₁-C₁₈-hydrocarbon radicals which are free of aliphatic carbon-carbon multiple bonds and
R¹ are identical or different monovalent, unsubstituted or halogen- or cyano-substituted C₁-C₁₀-alkenyl groups which are bound to the silicon either directly or via a divalent organic group,
(B) from 2 to 100 parts by weight of a diorganopolysiloxane having a viscosity determined at 25°C of from 500 to 1 000 000 mPas and made up of units of the formula (2) and from 0.5 to 20 mol% of units of the formula (3) and 2 units selected from among units of the formula (1) and units of the formula (4),
[R₃SiO_{1/2}] (4),
(C) an SiH-functional crosslinker whose composition corresponds to the average formula (5)
HₐR² _{b}SiO_{(4-a-b)/2} (5),
where
R² is defined as for R and
a and b are nonnegative integers,
with the provisos that 0.5<(a+b)<3.0 and 0<a<2 and that at least two hydrogen atoms bound to silicon are present per molecule and
(D) a hydrosilylation catalyst.

2. Addition-crosslinkable silicone compositions according to Claim 1 in which the viscosity of the polydiorganosiloxane (B) is not more than 50% of the viscosity of the polydiorganosiloxane (A).

3. Addition-crosslinkable silicone compositions according to Claim 1 or 2 in which the diorganopolysiloxane (A) has a viscosity determined at 25°C of from 300 000 to 700 000 mPas.

4. Addition-crosslinkable silicone compositions according to any of Claims 1 to 3 in which the diorganopolysiloxane (B) has a viscosity determined at 25°C of from 5 000 mPas to 100 000 mPas.

5. Addition-crosslinkable silicone compositions according to any of Claims 1 to 4 which additionally contain a diorganopolysiloxane (E) having a viscosity determined at 25°C of from 1 000 to 200 000 mPas and made up of 2 units of the formula (1), units of the formula (2) and from 0 to 0.01 mol% of units of the formula (3).

6. Silicone elastomers obtainable by crosslinking the addition-crosslinkable silicone composition according to any of Claims 1 to 5.

## Revendications

1. Masses de silicone réticulables par addition, qui contiennent
(A) 100 parties en poids de diorganopolysiloxane présentant une viscosité déterminée à 25°C de 220 000 à 1 000 000 mPa.s, élaboré à partir de deux unités de formule générale (1)
[R₂R¹SiO_{1/2}] (1),
d'unités de formule générale (2)
[R₂SiO_{2/2}] (2),
et de 0 à 0,1% en mole d'unités de formule générale (3)
[RR¹SiO_{2/2}] (3),
où, dans les formules générales (1) à (3)
R signifie des radicaux hydrocarbonés en C₁ à C₁₈ identiques ou différents, monovalents, le cas échéant substitués par halogène ou cyano, liés par SiC, qui sont exempts de liaisons multiples aliphatiques carbone-carbone et
R¹ signifie des groupements alcényle en C₁ à C₁₀, identiques ou différents, monovalents, le cas échéant substitués par halogène ou cyano, le cas échéant liés par un groupement organique divalent au silicium,
(B) 2 à 100 parties en poids de diorganopolysiloxane présentant une viscosité déterminée à 25°C de 500 à 1 000 000 mPa.s, élaboré à partir d'unités de formule générale (2) et de 0,5 à 20% en mole d'unités de formule générale (3) et de 2 unités choisies parmi les unités de formule générale (1) et d'unités de formule générale (4),
[R₃SiO_{1/2}] (4),
(C) un réticulant à fonctionnalité SiH, dont la composition correspond à la formule générale moyenne (5)
HₐR²_{b}SiO_{(4-a-b)/2} (5),
dans laquelle
R² présente les significations de R et
a et b sont des nombres entiers non négatifs à condition que 0,5<(a+b)<3,0 et 0<a<2, et qu'au moins deux atomes d'hydrogène liés par silicium par molécule soient présents,
(D) un catalyseur d'hydrosilylation.

2. Masses de silicone réticulables par addition selon la revendication 1, dans lesquelles la viscosité du polydiorganosiloxane (B) représente au maximum 50% de la viscosité du polydiorganosiloxane (A).

3. Masses de silicone réticulables par addition selon la revendication 1 ou 2, dans lesquelles le diorganopolysiloxane (A) présente une viscosité déterminée à 25°C de 300 000 à 700 000 mPa.s.

4. Masses de silicone réticulables par addition selon les revendications 1 à 3, dans lesquelles le diorganopolysiloxane (B) présente une viscosité déterminée à 25°C de 5000 mPa.s à 100 000 mPa.s.

5. Masses de silicone réticulables par addition selon les revendications 1 à 4, dans lesquelles la masse de silicone réticulable par addition contient en outre un diorganopolysiloxane (E) présentant une viscosité déterminée à 25°C de 1000 à 200 000 mPa.s, élaboré à partir de 2 unités de formule générale (1), d'unités de formule générale (2) et de 0 à 0,01% en mole d'unités de formule générale (3).

6. Elastomères de silicone, pouvant être obtenus par réticulation des masses de silicone réticulables par addition selon les revendications 1 à 5.
